# EUROPEAN PATENT APPLICATION

(11) **EP 4 814 646 A1**
(43) Date of publication of application: **30.09.2026**
(21) Application number: 26164640.0
(22) Date of filing: 13.03.2026
(51) Int. Cl.: G05D 11/13, B01F 21/00, B05B 1/00, F16K 1/00

(54) **DOSING DEVICE AND DOSING EQUIPMENT**

(30) Priority: 24.03.2025 IT 202500005973
(71) Applicant: Pirovano S.r.l., 20023 Cerro Maggiore (MI) (IT)
(72) Inventor: PIROVANO, Marco Emilio, 23871 Lomagna (LC) (IT)
(74) Representative: Lunati & Mazzoni S.r.L.

(57) **Abstract**

A dosing device (1) for dosing predetermined amounts of the fluids to be dosed, the device (1) comprising a structure (10), defining a main axis (1a), a first and a second end (10a, 10b), the structure (10) comprising a first conduit (100) configured to flow the fluids to be dosed and comprising second housings (12) open at least at the second end (10b); first ducts (13) suitable for inputting the fluids to be dosed, in fluid passage connection with a source of one of the fluids to be dosed and with one of the second housings (12); shuttering elements (3) suitable for allowing or preventing the passage of the fluids to be dosed to an external environment, the fluids to be dosed becoming dosed fluids when dispensed; the device (1) comprising a moving element (2) suitable for moving along the main axis (1a), around it and to move the shutter elements (3), the dosed fluids being dispensed into an external container; the structure (10) comprising a second duct (101) configured to flow washing fluids, drying fluids and non-dosed fluids, and comprising a second duct (15) suitable for conveying the washing and drying fluids, at least to the second end (10b); the second duct (15) being in fluid passage connection with a tank of washing and drying fluids, and being open; the second duct (15) comprising a second through cavity (152) extending within the moving element (2); a collection element (6) suitable for preventing dripping of undosed fluids and to allow delivery of one of said selected dosed fluids.

## Description

The present invention relates to a dosing device of the type specified in the preamble to the first claim.

In addition, the present invention relates to a piece of dosing equipment. Similar devices are described in patent applications WO-A-02/07867 and IT-A-201900001969.

The object of the present invention is a dosing device that finds application in the production of mixtures, predominantly but not exclusively colored, formulated by high-precision dosing of fluid products.

Dosing devices for fluid products are currently known. In multiple industries, the formulation of batches, predominantly colored and therefore obtained by high-precision sequential dosing of individual fluid components, is extremely important to ensure the highest targets of repeatability, traceability and certifiability of mixtures.

In order to dose the individual components, fluid dosing devices were made. They can be devices that can take advantage of separate channels for individual components, and in which, for each of them, there are devices that facilitate flow rate regulation and dosing accuracy for the individual fluid to be dosed.

A limitation of the developed dosing devices was their ability to provide good flow rate control performance while ensuring excellent accuracy. In order to make the regulation of the flow rate of individual fluids more effective, dosing devices have been made that allow fine adjustment in individual channels. Specifically, patent IT102022000003845 filed on 02/03/2022 describes fluid dosing valve and fluid dosing plant equipped with such a valve. The described valve allows fine control of the amount of individual fluid components that go into the final formulation.

The prior art described comprises some important drawbacks.

In particular, known dosing devices cannot guarantee the high accuracies needed to achieve the accurate formulation of mixtures. They also do not allow some maintenance operations to be carried out easily.

In this situation, the technical task underlying this invention is to devise a dosing device and a piece of equipment to support a dosing device capable of substantially overcoming at least part of the aforementioned drawbacks.

Within the scope of the said technical task, it is an important purpose of the invention to obtain a dosing device and dosing equipment that will enable efficient dispensing of the fluids fed.

Another important purpose of the invention is to obtain a dosing device capable of high dosing accuracies.

An additional important purpose of the invention is to realize a dosing device and dosing equipment that can reduce manual adjustment while making maintenance operations easier.

The technical task and the specified aims are achieved by a dosing device as claimed in the attached claim 1.

Preferred technical solutions are highlighted in dependent claims.

The characteristics and advantages of the invention are clarified below by the detailed description of preferred embodiments of the invention, with reference to the accompanying figures, in which:

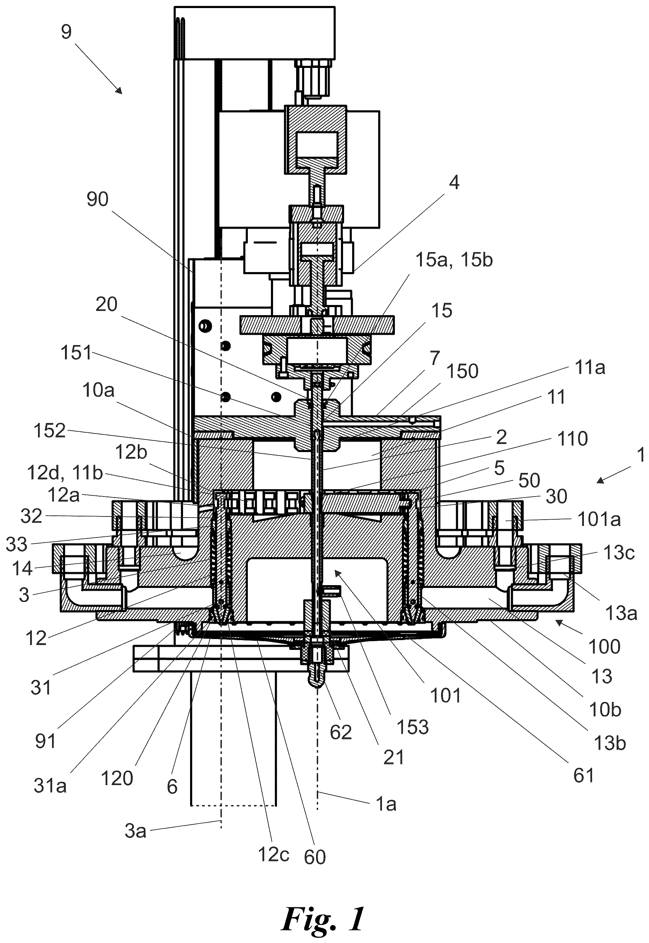

**Fig. 1** shows a sectional view of a dosing device and dosing equipment according to the invention.

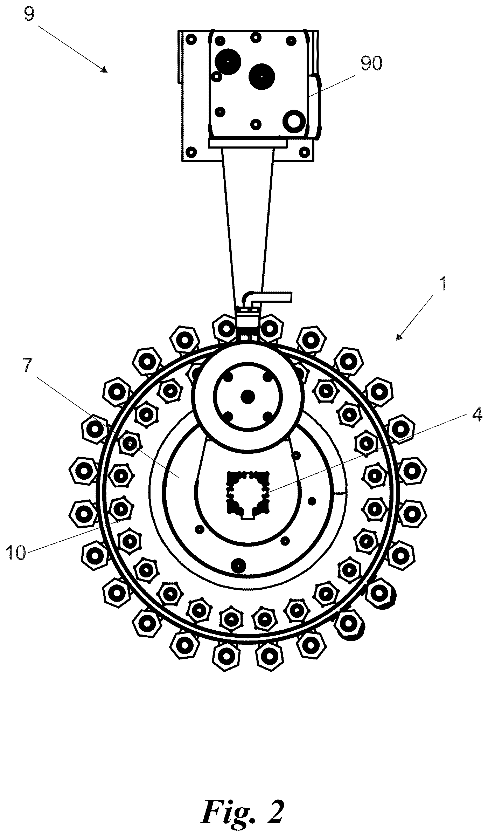

**Fig. 2** shows a top view of a dosing device and dosing equipment according to the invention.

In this document, when measurements, values, shapes, and geometric references (such as perpendicularity and parallelism) are associated with words like "approximately" or other similar terms, such as "almost" or "substantially", they are to be understood as excluding measurement errors or inaccuracies due to production and/or manufacturing errors and, above all, as having less than a slight deviation from the associated value, measurement, shape, or geometric reference. For example, if associated with a value, such terms preferably indicate a deviation of no more than 10% of the value itself.

Furthermore, when terms such as "first", "second", "upper", "lower", "main", and "secondary" are used, they do not necessarily identify an order, relationship priority, or relative position, but they can simply be used to distinguish different components more clearly from one another.

Unless otherwise specified, as reflected in the following discussions, terms such as "processing", "computing", "determination", "computation", or the like are considered to refer to the action and/or processes of a computer or similar electronic computing device that manipulates and/or transforms data represented as physical, such as electronic quantities of records of a computer system and/or memories, in other data similarly represented as physical quantities within computer systems, records, or other information storage, transmission, or display devices.

The measurements and data reported in this text are to be considered, unless otherwise indicated, as performed in the International Standard Atmosphere ICAO (ISO 2533:1975). With reference to the figures, the device according to the invention is globally indicated with the number 1. It is a dosing device. In detail, it is a dosing valve. Specifically, it is a device for dosing predetermined amounts of fluids to be dosed. For example, the fluids to be dosed can be liquid products, liquid phase dispersions or pastes. Fluids to be dosed can also be resins, pastes or pigmented solutions. Dosed fluids are preferably dispensed by force of gravity. For example, they can be dispensed by pumps or pressure. Dosed fluids are preferably dispensed in an external container. One or more dosed fluids are dispensed into the external container.

Device 1 preferably includes a structure **10**. It is a support structure. In this regard, it defines a main axis **1a.** Preferably, structure 10 is mainly developed along the main axis 1a. For example, it may have a cylindrical shape with axis coincident with the main axis 1a. Structure 10 preferably defines a first end **10a** and a second end **10b** opposite the first end 10a along a direction parallel to the main axis 1a.

For example, the first end 10a may be the end of structure 10 suitable for being placed at a greater distance from a ground than the second end 10b.

Structure 10 preferably includes a first housing **11.** It can be placed in the first end 10a. In particular, the first housing 11 can be opened. For example, it may be accessible from the outside. First housing 11 preferably defines a first access **11a.** It can be the access to the first housing 11 at greater distance from the ground.

Structure 10 preferably includes a first pipeline **100**. It is a pipeline configured to flow the fluids to be dosed

In particular, the first pipeline 100 preferably includes a plurality of second housings **12.** They may extend from the first end 10a to the second end 10b.

Each of the second housings 12 is preferably open at least at the second end 10b. They can be distributed radially around the main axis 1a. For example, the second housings 12 can be distributed along a circumference having its center on the main axis 1a. Preferably, each of the second housings 12 extends mainly along a respective secondary axis **3a.** Each secondary axis 3a is an axis parallel to the main axis 1a. In addition, each second housing 12 can be extended from the first end 10a to the second end 10b.

Second housings 12 can be arranged radially around the main axis 1a in structure 10. The first housing 11 is preferably in fluid passage connection with the second housings 12. For example, each second housing 12 can be accessed from the first housing 11 by a first through opening **12a.**

Each second housing 12 preferably defines a second opening **12b.** It is a through opening placed in the first end 10a.

In addition, each second housing 12 preferably defines a third opening **12c.** It is a through opening placed in the second end 10b. Each third opening 12c is suitable for expelling dosed fluids. Therefore, at the third openings 12c the external container can be placed. In detail, the external container can be placed closer to the ground than the third openings 12c.

First pipeline 100 preferably includes first ducts **13.** They are channels suitable for the intake of the fluids to be dosed. In addition, they are suitable for making unmetered fluids flow as well. In detail, a fluid to be dosed can be fed into each first duct 13. In addition, the first ducts 13 are respectively in fluid passage connection with a source of one of the fluids to be dosed. Each of the first ducts 13 are in fluid passage connection with one of the second housings 12, respectively.

Each first duct 13 defines a first hole **13a** passing in a first end of the first duct 13 and a second hole **13b** passing in a second end of the first duct 13, opposite the first end.

Therefore, the first hole 13a is suitable to allow the fluid to be dosed to enter the first duct 13. It can be the hole into which a fluid to be dosed is fed. For example, the fluid to be dosed can be fed into a first duct 13. In detail, the first hole 13a is preferably in fluid passage connection with a source of a fluid to be dosed.

Specifically, a fluid to be dosed can be fed from a source in fluid passage connection with the first inlet hole 13a. The source may include a tank containing the fluid to be dosed and a channel in fluid passage connection with the tank and the first inlet hole 13a. The first inlet hole 13a may include a shut-off valve for adjusting the flow rate of the fluid to be dosed. The second hole 13b can be the outlet hole of the fluid to be dosed from the first duct 13. In detail, each second hole 13b places a respective first conduit 13 in fluid passage connection with a respective second housing 12. In this way, the fluid to be dosed fed into the first duct 13 can be conveyed into the second housing where dosing takes place. Structure 10 advantageously includes a second pipeline **101.** It is a pipeline configured to flow flushing fluids. They preferably include cleaning solutions. In addition, the second pipeline 101 is configured to flow drying fluids. The latter preferably include gas. In addition, the second pipeline 101 is configured to flow undosed fluids. The latter preferably include undosed fluids to be dosed. In addition, they include residual fluids to be dosed. The second pipeline 101 advantageously enables washing and drying operations and facilitates maintenance operations of device 1.

The second pipeline 101 preferably includes a recirculation duct **101a.** It is a duct in fluid passage connection with one of the first ducts 13. In particular, recirculation duct 101a is preferably designed to flow undosed fluids passing through the first duct 13 to the tank of the fluid to be dosed.

In detail, at least a first duct 13 preferably defines a third through-hole **13c.** In detail, each third hole 13c is located in an intermediate portion of the respective first duct 13 between the first hole 13a and the second hole 13b. In this regard, the third hole 13c can be in fluid passage connection with the recirculation duct 101a. The latter is in fluid passage connection with the tank of the fluid to be dosed. The third hole 13c is preferably suitable for flowing the undosed fluid passing through the first duct 13 to the tank of the fluid to be dosed. The recirculation duct 101a has the advantage of preventing sediment formation of the fluid to be dosed when device 1 is not in use. In addition, undosed fluid removed from the first duct 13 can be advantageously reused. It can, in fact, be fed back into the first duct 13.

First pipeline 100 preferably includes shutter elements **3.** They are suitable for allowing or preventing the passage of fluids to be dosed for second housings 12 from first channels 13 to an external environment at the second end 10b.

They perform the function of enabling the dosing of the fluids to be dosed from the first ducts 13. Fluids to be dosed preferably become dosed fluids once dispensed into the container below.

Each shutter element 3 is an element mainly developing along a secondary axis 3a. Preferably, each shutter element 3 has radial development around the secondary axis 3a. Even more preferably, each shutter element 3 develops more along the secondary axis 3a than radial development around the same axis.

Each of the shutter elements 3 is housed in a respective second housing 12. In detail, each shutter element 3 defines a first portion **30.** At the first portion 30, shutter element 3 has radial development around the secondary axis 3a that is less than the radial development that shutter element 3 has with respect to the portions near the first portion 30.

The shutter element 3 is housed in a respective second housing 12. In particular, each shutter element 3 is conveniently inserted into the second housing 12 so that it can translate along the secondary axis 3a.

In detail, each shutter element 3 defines a second portion **31.** It is preferably an extreme portion of the shutter element 3. The second portion 31 is suitable for reversibly plugging the corresponding third opening 12c. In particular, the second portion 31 preferably includes a head **31a**. It is suitable for adjusting the flow rate of the fluids to be dosed in response to the movement of the shutter element along the secondary axis 3a.

It is a portion having development in the radial direction with respect to the secondary axis 3a higher than the portions of the shutter element 3 close to the second portion 31. Head 31a can be an element bound solidly to the second portion 31. For example, head 31a may include a rounded end. In this regard, the third opening 12c may include an edge portion **120.** The latter performs the function of making contact with the head end 31a so as to obstruct the third opening 12c. In this regard, the end of head 31a can be partially countershaped to the edge portion 120. In this way, the end of head 31a can effectively close the third opening 12c. For example, the edge portion 120 can be a rigid ring constrained to the edge of the third opening 12c.

The distance between the head 31a and the second portion 31 adjusts the flow rate of the fluids to be dosed in said third opening 12c as the position of the shutter element 3 changes. In general, each shutter element 3 advantageously allows the passage of fluids to be dosed to be prevented or allowed to pass depending on its placement within its respective second housing 12.

In this regard, each shutter element 3 defines at least one opening position. Specifically, when shutter element 3 is in the open position, the second portion 31 is spaced from the third opening 12c. In this way, fluids to be dosed coming from the first port 13 and passing through the second hole 13b can be fed into the second housing 12 and exit from it via the third opening 12c.

Shutter element 3 defines a closed position. Specifically, when shutter element 3 is in the closed position, the second portion 31 closes the third opening 12c.

Shutter element 3 can switch reversibly from the closed position to the open position. The amount of a dosed fluid dispensed through the third opening 12c depends on the duration of the transition from the closed position to the open position and the subsequent return to the closed position of shutter element 3, the maximum distance reached by the second portion 31 from the third opening 12c when shutter element 3 is in the open position, and the speed of the transition of shutter element 3 from the closed position to the open position and the return to the closed position.

A positioning element can be interposed between each second housing 12 and the respective shutter element 3. For example, the latter can be a compression spring with an axis aligned with the secondary axis 3a. The positioning element advantageously keeps shutter element 3 in the closed position in the absence of stresses applied to shutter element 3 itself.

Device 1 preferably includes sealing elements **32.** Each of them can be a gasket. It is suitable for obstructing at least the passage of fluids.

Device 1 preferably includes supporting elements **33.** Each supporting element 33 is a rigid element constrained to a respective second housing 12. For example, it can be a threaded ring screwed to an internal threaded portion of the second housing 12. In detail, the threaded ring is oriented such that it is centered on the secondary axis 3a. Each supporting element 33 is in contact with a sealing element 32.

Each supporting element 33 is suitable for supporting a respective sealing element 32. Each sealing element 32 and the corresponding supporting element 33 are preferably placed in a portion of the corresponding second housing 12 near the first end 10a. Structure 10 preferably includes a first through cavity **110.** It is a cavity accessible from the first end 10a. In detail, it is accessible from the first housing 11. In addition, the first through cavity 110 is accessible from the second end 10b.

The first through cavity 110 is preferably aligned with the main axis 1a. Even more preferably, the first through cavity 110 extends mainly along the main axis 1a.

Device 1 includes a moving element **2.** It is an element designed to move said shutter elements 3. In particular, the moving element 2 can be a stem. In detail, the moving element 2 can be an element having development along the main axis 1a. The moving element 2 is preferably housed in the first through cavity 110. It is constrained to the structure orthogonally to the main axis 1a. Therefore, the moving element 2 is capable of moving within the first through cavity 110 by translation along the main axis 1a and by rotation around the same axis.

Device 1 preferably includes a selection element **5.** It is an element integrally constrained to the moving element 2. In detail, it may be an element developing mainly along a direction orthogonal to the main axis 1a. Selection element 5 preferably includes a distal portion **50** from moving element 2. The distal portion 50 is preferably counter-shaped to the first portions 30.

Each first portion 30 is preferably placed at a corresponding first opening 12a.

In detail, selection element 5 is suitable for engaging a selected shutter element 3. Specifically, selection element 5 can engage shutter element 3 by insertion of the distal portion 50 into the first portion 30. In addition, when the motion element 2 is moved along the main axis 1a, the selection element 5 transmits the translatory motion to the shutter element 3. As a result, shutter element 3 can move from a closed position to an open position and vice versa, depending on the movement made by moving element 2.

In addition, selection element 5 allows a shutter element to be selected by rotating moving element 2. In fact, moving element 2 can be rotated so that selection element 5 is positioned at the selected shutter element 3 and the distal portion 50 engages the first portion 30 of the selected shutter element 3.

The distal portion 50 can enter a first opening 12a and engage the corresponding first portion 30.

In general, the selected shutter element 3 is preferably placed in motion along a secondary axis 3a from the moving element 2. Specifically, movement is done by means of selection element 5. Therefore, in response to movement, shutter element 3 may allow or prevent the passage of one of the dosing fluids to the external environment at the second end 10b. The second pipeline 101 preferably includes a recirculation collection channel **14.** It is preferably located at a peripheral location to structure 10. In particular, it can be placed near the outer walls of structure 10. The collection channel 14 can be placed near the fourth openings 12d. In particular, collection channel 14 is located at a lower distance from the ground than the fourth openings 12d.

Preferably, the collection channel 14 is suitable for collecting excess undosed fluids that may flow from the first housing 11 or the second housings 12. In detail, the collection channel 14 is suitable for collecting excess undosed fluids that may flow from the fourth openings 12d.

The collection channel 14 may include a sloping bottom and having a progressively smaller distance from the ground as it approaches the main axis 1a. In this way, the collected excess undosed fluids can be more easily confined.

Therefore, the fourth openings 12d and the collection channel 14 allow any excess undosed fluids to be effectively conveyed and prevent them from flowing uncontrollably into other areas of device 1.

Each second housing 12 preferably includes a fourth through-hole **12d.** In detail, the fourth opening 12d is located on an exterior wall of structure 10. Therefore, the fourth openings 12d are located on the walls of structure 10 at a greater distance from the main axis 1a. Specifically, the fourth openings 12d are suitable for placing the second housings 12 in fluid passage connection with the collection channel 14. In detail, they advantageously allow undosed fluids that might accumulate in the second housings 12 to drain away. They advantageously make it possible to prevent an accumulation of undosed fluids in structure 10.

Similarly, the second pipeline 101 preferably includes a plurality of fifth through openings **11b.** They are located on an exterior wall of structure 10. Therefore, the fifth openings 11b are located on the walls of structure 10 at a greater distance from the main axis 1a. Specifically, the fifth openings 11b are suitable for placing the first housings 11 in fluid passage connection with the collection channel 14. In detail, the fifth through openings 11b advantageously allow undosed fluids that might accumulate in the first housing 11 to drain out. They advantageously make it possible to prevent an accumulation of undosed fluids in structure 10.

The second pipeline 101 preferably includes a first discharge duct. It is a duct suitable for placing the collection channel 14 in fluid passage connection with an external discharge environment. The first discharge duct advantageously allows undosed fluids accumulated inside the structure 10 to be conveyed outside the device.

The second pipeline 101 preferably includes a collecting element **6.** It can be a catchment area. The collecting element 6 is suitable for preventing the dripping of undosed fluids to said external container or to a ground, to collect said undosed fluids, and to allow the dispensing of one of said selected dosed fluids.

In detail, collecting element 6 can be loosely constrained to the second end 10b. For example, collecting element 6 can define a bottom portion. The latter may preferably be conical, with walls converging to a portion at a lesser distance from the ground preferably centered on the main axis 1a. In particular, collecting element 6 is placed at all third openings 12c. In detail, collecting element 6 is located at a shorter distance from the ground than the fourth openings 12c. Therefore, collecting element 6 is suitable for collecting undosed fluids that may leak from the fourth openings 12c. Therefore, it performs the function of preventing unwanted droplets of undosed fluids lost from unselected fouth openings 12c in the external container into which the dosed fluids are dropped.

In addition, it may include crosswalls along the edge. The latter may develop mainly along a direction parallel to the main axis 1a. Therefore, collection element 6 may include walls protruding toward the second end 10b and a bottom placed at a greater distance from the second end 10b than the distal portion of the walls.

The collecting element 6 is preferably integrally constrained to rotate with the moving element 2 around the main axis 1a.

In particular, collecting element 6 may have a substantially discoidal shape. For example, it may include a cylindrical wall protruding from the edge. Said cylindrical wall may include means of loose constraint. The latter may include a cylindrical wall protruding from the second end 10b and at least partly countershaped to the cylindrical wall of the collecting element 6. For example, the cylindrical wall protruding from the edge of the collecting element 6 can be rotated with respect to the cylindrical wall protruding from the second end 10b.

The discoidal collecting element 6 can be centered on the main axis 1a. In particular, it can define a constraint portion **60.** The latter is preferably constrained to moving element 2. In addition, the constraint portion 60 can be centered on the main axis 1a. The collecting element 6 can rotate integrally with the moving element 2.

The collecting element 6 preferably includes a selection hole **61.** It is a through hole placed in the bottom portion. Selection hole 61 is suitable for allowing the passage of dosed fluids dispensed from a predetermined third opening 12c.

For example, collecting element 6 can be oriented so that selection hole 61 is located at the third opening 12c corresponding to shutter element 3 selected by positioning selection element 5.

Therefore, the collecting element 6 advantageously performs the function of dosing dosed fluids dispensed from the third opening 12c at the selected shutter element 3 and preventing the accidental spillage of undosed fluids from any other unselected third opening 12c. In this way, the dosing of dosed fluids collected in the external container is more accurate.

The moving element 2 preferably defines a third end **20.** It is an end placed near the first end 10a.

In addition, moving element 2 preferably defines a fourth end **21.** It is an opposite end to the third end 20. In addition, the fourth end 21 is placed at a position close to the second end 10b.

The collecting element 6 is preferably tied to the fourth end 21.

It can correspond to the center of rotation of the collecting element 6.

The second pipeline 101 preferably includes a second duct **15.** It is a duct suitable for conveying washing fluids and drying fluids to at least the second end 10b. Therefore, the second duct 15 advantageously allows for washing and drying of the outside of the shutters 3 and prevents previously dispensed fluids from drying out and forming scaling. In this regard, washing fluids include cleaning solutions. For example, they may be solutions comprising water, solvents and surfactants. Drying fluids may include gases. For example, they may include air.

The second duct 15 is preferably in fluid passage connection with a flushing fluid tank. The second duct 15 is preferably in fluid passage connection with a drying fluid tank. In particular, the latter can be a container containing pressurized gas. For example, the container can be a compressed air tank.

In addition, the second duct 15 is preferably open at an outdoor environment near the second end 10b.

In detail, the second duct 15 includes an inlet channel **150.** It is suitable for the input of washing fluids or drying fluids inside the second duct 15. The inlet channel 150 preferably includes a first inlet hole. It is an access hole to the inlet channel 150 in fluid passage connection with a flushing fluid supply pipeline. Therefore, flushing fluids can advantageously be fed into the first inlet hole while flushing device 1.

The inlet channel 150 preferably includes a second inlet hole. It is an access hole to the inlet channel 150 in fluid passage connection with a drying fluid supply pipeline. Therefore, drying fluids can advantageously be fed into the second inlet hole while drying device 1. The presence of the first inlet hole and the second inlet hole is advantageous because it allows the inlet ducts for washing fluids and drying fluids to be kept separate. In this way, the respective tanks or cylinders can be easily connected, without having to connect and disconnect different pipelines when switching from washing to drying.

The second duct 15 preferably includes a third housing **151.** It is a portion of the second duct in fluid passage connection with inlet duct 150. It is a housing designed to accommodate a part of the moving element 2. The moving element 2 can slide along the main axis 1a with respect to the third housing 151. The third housing 151 is preferably sealed. In this way, the flushing fluids fed into the third housing 151 are not dispersed to the outside.

The third housing 151 preferably includes a pair of slide openings **15a.** These are aligned and centered on the main axis 1a. Moving element 2 is housed in both slide openings 15a and can be placed in translation and rotation relative to them. In detail, both slide openings 15a preferably include sealing components **15b.** The latter may be in contact with the moving element 2. Sealing components 15b are designed to prevent the escape of washing fluids or drying fluids from the third housing 151. In this way, the moving element 2 can advantageously slide along the main axis 1a without its movement causing the fluids passing inside the third housing to leak out.

Preferably, moving element 2 includes a second through cavity **152.** It is a cavity extending inside the moving element 2. In particular, it is in fluid passage connection with the third housing 151. In detail, the second through cavity 152 includes a through hole. It places the third housing 151 in fluid passage connection with the through cavity 152.

The second duct 15 preferably includes a nozzle **153.** It is preferably in fluid passage connection with the second through cavity 152. In addition, nozzle 153 is preferably open to the outside environment. Nozzle 153 is configured to spray one of a choice of washing fluids and drying fluids from the second through cavity in the external environment near the second end 10b. In this way, washing fluids from the second through cavity can be atomized by passing through nozzle 153 and sprayed outward by a misting jet. The jet including washing fluids allows washing of the third openings 12c. In addition, it allows washing of exposed parts. Similarly, nozzle 153 allows a jet of drying fluids to be sprayed in the drying stages of the third openings 12c.

The inlet channel 150, the third housing 151 and the through cavity 152, connected to the third housing 151 by the through hole and the nozzle 153 form the second duct 15.

In this regard, collecting element 6 is preferably in fluid passage connection with a second discharge duct **62.** It is a duct designed to convey liquids collected on the face of the collecting element 6 facing the second end 10b to a discharge environment. Specifically, fluids may include unmetered fluids and residual flushing fluids. In this way, at least the unmetered fluids removed from the surfaces invested by the spray jet and the washing fluids used in the wash can be removed from device 1 at the end of the wash.

The second discharge duct 62 can be placed at the lowest ground clearance portion of the bottom portion. In this way, due to the sloping walls of the collecting element 6, the liquids to be removed slide to the second discharge duct 62 and the conveyance of residual liquids is more efficient.

Device 1 preferably includes a closure element 7. It may be an element having mainly planar development. For example, closure element 7 can be a disk. Therefore, it can be oriented so that the main development plane is both an orthogonal plane and a plane orthogonal to the main axis 1a. Closure element 7 is constrained to the first end 10a. In particular, the closure element 7 can be constrained at the first inlet 11a. Therefore, the closure element 7 is suitable for preventing access to the first housing 11 from outside along the main axis 1a. In this way, the moving components inside the first housing 11 are not directly accessible during device 1 use, thus making it safer.

For example, the inlet channel 150 and the third housing 151 can be inside the closure element 7. In detail, the first input hole and the second input hole can be placed on the outer portion of the closure element 7.

In addition, sliding openings 15a can be placed on two opposite faces of the disk along the main axis 1a.

For example, the structure of the moving element 2 can be substantially in the form of a stem including the second through cavity 152, which allows the inlet channel 150 within the closure element 7 to be placed in fluid passage connection with the collecting element 6, by means of a nozzle 153 that allows fluid to be discharged to the collecting element 6. Device 1 preferably includes an actuating element **4.** It is constrained to the moving element 2. In detail, actuating element 4 is configured to move moving element 2. In detail, actuating element 4 preferentially moves moving element 2 along the main axis 1a with a translation motion. In detail, moving element 2 can occupy all positions between two extreme positions along the main axis 1a.

In addition, the actuating element 4 transmits a rotational motion around the main axis 1a to the moving element 2.

Device 1 preferably includes control means. In particular, the control means may be electronic.

The control means are operationally connected to at least the actuating element 4.

A further object of the present invention is a piece of dosing equipment **9.** It includes device 1. Specifically, equipment 9 is a piece of equipment designed to dose the fluids to be dosed. In particular, it preferably includes first supply ducts. They, as anticipated, are in fluid passage connection with device 1. They are configured to feed device 1 with fluids to be dosed.

Equipment 9 preferably includes second supply ducts. They are preferably in fluid passage connection with device 1. They are configured to feed flushing fluids into device 1.

Equipment 9 preferably includes third supply ducts. They are preferably in fluid passage connection with device 1. In addition, they are configured to feed drying fluids into device 1. The control means are operationally connected to the first supply ducts, second supply ducts, and third supply ducts.

Equipment 9 preferably includes a support structure. It is preferably constrained to device 1. In addition, the support structure is operationally connected to the control means. The support structure is configured to support device 1. In addition, the support structure is configured to move device 1 along the main axis 1a. Therefore, device 1 can translate along the main axis 1a. In this regard, the support structure preferably includes movement means **90.** They are means connected to device 1 and are configured to move device 1 along the main axis 1a.

In particular, they may include an arm constrained to structure 10. The arm may be capable of sliding along a linear rail. For example, the linear rail can slide the arm along an axis parallel to the main axis 1a. This solution advantageously allows you to be able to adjust the distance between device 1 and the outer container. In fact, by being able to move with respect to the container device 1, equipment 9 can be used with containers of different sizes, making equipment 9 versatile.

Preferably, the movement means 90 are operationally connected to the control means. The latter are further configured to move device 1 along the main axis 1a in response to a command from the control means.

Equipment 9 preferably includes position sensors **91.** They are designed to detect a detected value of the distance between device 1 and the external container. In this regard, position sensors 91 can be placed at device 1. In detail, they can be placed at the second end 10b.

Position sensors 91 are operationally connected to the control means. These are further configured to receive the value detected by position sensors 91. In addition, the control means are further configured to select a predetermined range of distance values. Preferably, the control means are further configured to command the movement of the movement means 90 until the detected distance value matches a predetermined range value.

In this way, eqiupment 9 advantageously allows the adjustment of the distance between device 1 and the external container to be made automatic.

Therefore, equipment 9 allows advantageously controlling the drop of dosed fluids effectively during dosing. In this way, splashing can be prevented when drops of dosed fluids fall inside the external container.

Equipment 9 preferably includes weighing means. Alternatively, device 1 includes weighing means. In particular, they may include an analog or digital scale. Alternatively, weighing means may include a load cell. Specifically, weighing means are suitable for measuring the weight of dosed fluids. They are operationally connected to the control means.

The external container can be placed on the weighing means. In this way, the dispensed dosed fluids are collected in the external container and weighed simultaneously by the weighing means.

Preferably, the control means are further configured to select a fluid to be dosed. In addition, the control means are preferably configured to select a predetermined amount of the selected fluid to be dosed. Therefore, the selection of dosed fluid and predetermined amount can be automatic.

Alternatively, the selection can be made by a user. For example, control means can be operationally connected to a control interface. It may include manual actuators or a touch screen display interface. In this way, a user can command the selection of the fluid to be dosed and the predetermined amount.

The control means are preferably configured to send an actuation command to actuating element 4. The latter, in response to said command, moves the moving element 2, which orients the selection element 5 at a shutter element 3 corresponding to the fluid to be dosed selected. Therefore, actuation element 4 moves shutter element 3. Therefore, the control means advantageously allow the dispensing of the selected fluid until the weighing means measure the predetermined quantity. Alternatively, interruption of supply can be carried out by the user.

Therefore, the control means can command the repositioning of shutter element 3 to the closed position once the predetermined quantity has been measured automatically.

Alternatively, the user can command the supply to be interrupted. In particular, the users can stop dispensing once they read a weight value corresponding to the predetermined quantity.

The operation of device 1 and equipment 9 previously described in structural terms is as follows.

In dosing operations, by means of the control means, the selection of the fluid to be dosed is made. Specifically, the moving element 2 is rotated until the selection element 5 engages the shutter element 3 of the second housing 12 connected to the first conduit 13 into which the selected fluid to be dosed flows. Specifically, the selection element 5 engages the selected shutter element 3 in its first portion 30.

The fluids to be dosed are fed into the first ducts 13. In each of the ducts used during dosing, the fluids to be dosed flow to the corresponding second hole 13b, which is obstructed when shutter element 3 is in the closure position. The moving element 2, moved through the actuation element 4, translates along the main axis 1a. Translating the shutter element 3 to an open position allows the fluids to be dosed to flow inside the second housing 12. Shutter element 3 is returned to the closed position when the control means detect that the amount of dosed fluids in the external container measured by the weighing means corresponds to the predetermined amount. In this way, the predetermined amount of fluid to be dosed is dispensed through the third opening 12c. They can pass through selection hole 61 and fall into the external container. Distance adjustment is carried out by the control means in response to the reading of the distance value between the dosing device 1 and the external container carried out by the position sensors 91.

In washing operations, washing fluids may be fed into the second duct 15. They can flow within the through cavity 152 until they are atomized by the nozzle 153. Atomized washing fluids are sprayed on the second end 10b and third openings 12c, which are washed and cleaned of fluid residues. Flushing fluids and any drips of undosed fluids are collected on the bottom portion of collection element 6. From the bottom portion, liquids flow into the second discharge duct 62.

When excess liquids are present in the second housings 12 or the first housing 11, they may drain to the fourth openings 12d or the fifth openings 11b to the collection channel 14. From the collection channel 14, undosed excess fluids can flow to the first discharge duct. Device 1 and equipment 9 according to the invention achieve important advantages.

In fact, it enables efficient dosing of the fluids fed. In fact, the presence of the fourth openings 12d and fifth openings 11b effectively prevents situations in which the device becomes undesirably filled with undosed excess fluid. They are advantageously expelled through the discharge channelling.

Device 1 makes it possible to ensure high dosing accuracies.

In addition, the adjustment of the distance of the device from the external container by equipment 9 makes it possible to prevent splashing, which could lead to a reduction in the amounts of dosed fluids fed into the external container, if splashing leads to the first liquids falling outside the external container. Another advantage is that collection containers of different sizes can be used.

In addition, device 1 and equipment 9 make it possible to simplify maintenance operations. In fact, channelization for conveying washing fluids for washing and drying fluids for drying advantageously makes it possible to make these operations executable without the need for additional assembly and subsequent disassembly of the specific equipment for performing washing and drying. In fact, these operations can advantageously be carried out directly.

The invention can be modified to create different versions falling within the scope of the inventive concept defined by the claims.

In this context, all the details can be replaced by equivalent elements and any materials, shapes and dimensions can be used.

## Claims

1. Dosing device (1) for dosing predetermined quantities of fluids to be dosed comprising liquid products, liquid phase dispersions and solvents, said device (1) comprising a supporting structure (10), defining a main axis (1a), a first end (10a) and a second end (10b) opposite said first end (10a) along said main axis (1a), said structure (10) comprising a first pipeline (100) configured to cause said fluids to be dosed and comprising:
- a plurality of second housings (12) extending from said first end (10a) to said second end (10b), each of said second housings (12) being open at least at said second end (10b) and each extending along a respective secondary axis (3a) parallel to said main axis (1a);
- first ducts (13) suitable for the introduction of said fluids to be dosed, each of said first ducts (13) being respectively in fluid passage connection with a source of one of said fluids to be dosed and with one of said second housings (12);
- shutter elements (3) each housed in one of said second housings (12) and suitable for allowing or preventing the passage through said second housings (12) of said fluids to be dosed from said first ducts (13) to an environment external to said second end (10b), said fluids to be dosed becoming dosed fluids once dispensed to an external container;
said device (1) comprising:
- a moving element (2) suitable for moving along said main axis (1a), rotating around said main axis (1a) and moving said shutter elements (3);
- a selection element (5) constrained to said moving element (2) and suitable for engaging one of said selected shutter elements (3);
- said selected shutter element (3) being set in motion along said secondary axis (3a) by said moving element (2) by means of said selection element (5) and allowing or preventing the passage of one of said fluids to be dosed to said external environment at said second end (10b) in response to said motion, the dosed fluids being gravitationally dispensed into said external container;
and **characterized by the fact** that:
said structure (10) comprises a second pipeline (101) configured to cause washing fluids to flow, comprising detergent solutions, drying fluids, comprising gases, and undosed fluids,
comprising said undosed fluids and residues of said fluids to be dosed, said second pipeline (101) comprising:
- a second duct (15) suitable for conveying said washing fluids and said drying fluids, at least to said second end (10b);
- said second duct (15) being in fluid passage connection with a tank of said washing fluids, with a tank of said drying fluids and being open at said external environment next to at least said second end (10b);
- said second duct (15) comprising a second through cavity (152) extending within said moving element (2);
- a collecting element (6) designed to prevent the dripping of undosed fluids to said external container or to a ground, to collect said undosed fluids, and to allow the dispensing of one of said selected dosed fluids.

2. Device (1) according to claim 1, wherein said collecting element (6) is constrained to rotate jointly with said moving element about said main axis (1a), said collecting element (6) comprising:
- a selection hole (61) suitable for the passage of said dispensed dosed fluids;
- a second discharge duct (62) suitable for conveying the liquids collected on said collecting element (6) to a discharge environment.

3. Device (1) according to any one of the preceding claims, wherein said second pipeline (101) comprises a collection channel (14) suitable for collecting undosed excess fluids that may flow from said second housings (12), said collection channel (14) comprising a first discharge duct suitable for placing in fluid passage connection said collection channel (14) with an external discharge environment.

4. Device (1) according to the preceding claim, wherein each of said second housings (12) comprises a fourth through opening (12d), designed to place in fluid passage connection said second housings (12) with said collection channel (14).

5. Device (1) according to any of the preceding claims, wherein each of said second housings (12) extends primarily along a secondary axis (3a), parallel to said main axis (1a), each of said housings (12) comprising a third opening (12c) located at said second end (10b), said third opening (12c) being suitable for dispensing said dosed fluids, said third opening (12c) comprising an edge portion (120), each said shutter element (3) defining a second end portion (31) suitable for reversibly plugging said third opening (12c) corresponding, said second portion (31) comprising a head (31a) preferably developing in a radial direction with respect to said secondary axis (3a) upper compared with the portions of said shutter element (3) near said second portion (31), the distance between said head (31a) and said second portion (31) by adjusting the flow rate of said fluids to be dispensed into said third opening (12c) as the position of said shutter element (3) changes.

6. Device (1) according to any one of the preceding claims, wherein said second pipeline (101) comprises a recirculation pipeline (101a) in fluid passage connection with one of said first duct (13), said recirculation pipeline (101a) being capable of flowing said undosed fluids passing through said first duct (13) to said tank of said fluid to be dosed.

7. Device (1) according to any of the preceding claims, wherein:
- said second duct (15) includes an inlet channel (150) in fluid passage connection with said tanks of said washing fluids and said tanks of said drying fluids, said inlet channel (150) being suitable for the inlet of said washing fluids or said drying fluids within said second duct (15),
- said second duct (15) includes a third housing (151) in fluid passage connection with said inlet channel (150), said third housing (151) being sealed and being capable of housing part of said moving element (2);
- said moving element (2) comprising a second through cavity (152) in fluid passage connection with said third housing (151);
- said second duct (15) comprising a nozzle (153) in fluid passage connection with said second pass-through cavity (152) and being open to said external environment, said nozzle (153) being configured to spray one of a choice of said washing fluids and said drying fluids from said second pass-through cavity (152) into said external environment in the vicinity of said second end (10b).

8. Device (1) according to the preceding claim, wherein said structure (10) comprises a first housing (11) in said first end (10a), being in fluid passage connection with said second housings (12), said first housing (11) comprising a first access (11a) of said first housing (11) further from a ground, said device (1) comprising a closure element (7) designed to prevent access to said first housing (11) from the outside along said main axis (1a), said closure element (7) being constrained to said first end (10a) at said first access (11a), said inlet channel (150) and said third housing (151) being within said closure element (7).

9. Dosing equipment (9) comprising the device (1) according to any of the preceding claims, first supply ducts in fluid passage connection with said device (1) and configured to supply said device (1) with said fluids to be dosed, second supply ducts in fluid passage connection with said device (1) and configured to feed into said device (1) said washing fluids, third supply ducts in fluid passage connection with said device (1) and configured to feed into said device (1) said drying fluids, electronic type control means operatively connected to said first ducts, to said second ducts, to said third ducts, to said device (1), a support structure constrained to said device (1) and configured to support said device (1), said support structure comprising movement means (90) connected to said device (1), to said control means and configured to move said device (1) along said main axis (1a) in response to a command from said control means, weighing means suitable for detecting the weight of said dosed fluids operatively connected to said control means, said external container being positioned on said weighing means, said control means being further configured to select a fluid to be dosed, to select a predetermined amount of said selected fluid to be dosed, to send an actuating command to said actuating element (4), said actuating element (4), in response to said command, moving said moving element (2), said moving element (2) orienting said selecting element (5) at a said shutter element (3) corresponding to said selected fluid to be dosed, to move said shutter element (3) and to allow the dispensing of said dosed fluid corresponding to said selected fluid to be dosed until said weighing means measure said predetermined quantity.

10. Equipment (9) according to the preceding claim, comprising:
- position sensors (91) operatively connected to said control means and suitable for detecting a detected value of the distance between said device (1) and said external container;
- said control means being further configured to receive said detected value from said position sensors (91), to select a predetermined range of values of said distance, and to command the movement of said movement means (90) until the detected value of said distance corresponds to a value of said predetermined range.
